**Europäisches Patentamt**

**European Patent Office**

**Office européen des brevets**

(19)

(11) Veröffentlichungsnummer: **0 001 766**

A2

(12)

# EUROPÄISCHE PATENTANMELDUNG

(21) Anmeldenummer: **78101119.2**

(22) Anmeldetag: **11.10.78**

(51) Int. Cl.²: **B 29 B 1 00**
**B 29 B 1 02, C 08 J 3 12**
**C 08 L 23 00**

(30) Priorität: **21.10.77 DE 2747204**

(43) Veröffentlichungstag der Anmeldung:
**16.05.79 Patentblatt 79 10**

(84) Benannte Vertragsstaaten:
**BE CH DE FR GB NL SE**

(71) Anmelder: **HOECHST AKTIENGESELLSCHAFT**
**Postfach 80 03 20**
**D-6230 Frankfurt Main 80(DE)**

(72) Erfinder: **Mayer, Manfred, Dr.**
**Königsberger Strasse 8**
**D-6272 Niedernhausen Taunus(DE)**

(72) Erfinder: **Nöltner, Gerhard**
**Sossenheimer Weg 33a**
**D-6230 Frankfurt Main 80(DE)**

(72) Erfinder: **Nowack, Rudolf, Dr.**
**Westenbergerstrasse 34**
**D-6230 Frankfurt Main 80(DE)**

(72) Erfinder: **Strobel, Wolfgang, Dr.**
**Ubierstrasse 39**
**D-6238 Hofheim am Taunus(DE)**

(54) **Verfahren zum Verbessern der Verarbeitungseigenschaften von pulverförmigen Polyolefinen.**

(57) Die Verarbeitungseigenschaften von pulverförmigen Polyolefinen sollen verbessert werden. Es wird ein Polyolefinpulver angestrebt, das sich auf Schneckenmaschinen zu nahezu blasenfreiem Produkt verarbeiten läßt.

Das Polyolefinpulver wird auf eine Temperatur zwischen 40°C und seinem Schmelzpunkt erwärmt und in den Spalt zweier spaltbildender Elemente gebracht. Im Spalt wird das Pulver mit Anpresskräften von 0,1 bis 10 t/cm Spaltlänge verpresst und anschließend das verpresste Pulver zerkleinert.

EP 0 001 766 A2

0001766

- 1 -

HOECHST AKTIENGESELLSCHAFT HOE 77/F 207          D.Ph.HS/wö

Verfahren zum Verbessern der Verarbeitungseigenschaften
von pulverförmigen Polyolefinen

Gegenstand der Erfindung ist ein Verfahren zum Verbessern
der Verarbeitungseigenschaften von pulverförmigen Polyolefinen wie Polyäthylen, Polypropylen und Mischungen hieraus.

Beim Verarbeiten von pulverförmigen Polyolefinen auf Hochleistungseinschneckenmaschinen wird Luft in die Kunststoffmasse eingezogen, die im Endprodukt als unerwünschte
Blasen in Erscheinung tritt. Die Blasenbildung wird dadurch vermieden, daß man statt Pulver Granulat verwendet,
welches nach Aufschmelzen bei Temperaturen über 190°C in
einem Extruder hergestellt werden muß.
Diese Art der Behandlung des Polyolefinpulvers zum Zwecke
seiner besseren Verarbeitbarkeit ist sehr kostenintensiv
und führt zu einer zusätzlichen, unerwünschten thermischen
Belastung.

Es ist deshalb Aufgabe vorliegender Erfindung, ein Verfahren
der eingangs genannten Art zu schaffen, das auf einfache und äußerst wirtschaftliche Weise die Verarbeitbarkeit von Polyolefinpulver positiv beeinflusst, und zwar so, daß es auf Hochleistungseinschneckenmaschinen zu nahezu blasenfreiem Produkt verarbeitet werden kann.

Die Aufgabe wird durch ein Verfahren gelöst, das dadurch gekennzeichnet ist, daß das Polyolefinpulver auf eine Temperatur zwischen 40°C und seinem Schmelzpunkt, vorzugsweise zwischen 80° und 95°C erwärmt und anschließend in den Spalt zweier spaltbildender Elemente gebracht, dort mit Anpresskräften von 0,8 bis 2 t/cm Spaltlänge verpresst und das verpresste Material zerkleinert wird.

Das Pulver kann zu einem Band oder auch zu Granulat verpreßt werden, je nach dem ob die Oberfläche der spaltbildenden Elemente glatt oder siebartig ausgebildet ist.

Unter spaltbildenden Elementen werden die Walzen von Walzenpaare sowie Paare aus Walzen und ebene Fläche verstanden.

Während des Verpressens wird das erwärmte Polyolefinpulver einer Art plastischen Verformung unterworfen, wodurch die so behandelten Teilchen eine drastische Änderung ihrer Eigenschaften erfahren. So kann das Porenvolumen des Pulvers auf den Wert 0 gesenkt werden und die Luftdurchlässigkeit wird so stark erhöht, daß die beim Extrudiervorgang im Pulver noch eingeschlossene Luft im Extruder sehr leicht entweichen kann. Ferner tritt außerdem eine Schüttgewichtserhöhung ein. Durch diese Änderung der Eigenschaften läßt sich das Pulver praktisch blasenfrei mit hoher Wirtschaftlichkeit auf Hochleistungseinschneckenmaschinen verarbeiten.

Es hat sich gezeigt, daß diese Eigenschaftsänderungen auch mit Walzen erzielt werden können, die radiale Bohrungen besitzen und durch die das Material im Spalt verpresst wird, wodurch eine Art zylinderförmiges Granulat entsteht.

Die Verpressung mit den entsprechenden Eigenschaften läßt sich auch in einer Maschine erzielen, die eine ebene Platte mit Bohrungen aufweist, auf der eine oder mehrere parallel angeordnete Walzen das Pulver in dem zwischen Walze und Platte sich bildenden Spalt verpressen und durch die Bohrungen drücken. Die Größe der Bohrungen liegt dabei vorzugsweise zwischen 1, 5 und 6. mm.

Das in der bisher beschriebenen Weise verpresste Pulver wird in einer Hammermühle, einem Walzenstuhl oder ähnlichen Zerkleinerungswerkzeugen wieder auf eine vergleichbare Korngröße des Ausgangsmaterials gebracht.

Besondere Vorteile bietet das Verfahren beim direkten Inline-Betrieb. Hierbei wird nach der letzten Stufe des Herstellungsprozesses das den Trockner mit Temperaturen von 90° bis 100°C verlassende Pulver direkt verpresst, wodurch sich eine besonders wirtschaftliche, energiesparende Fahrweise dieses Verfahrens ergibt.

Mit dem nach dem erfindungsgemäßen Verfahren behandelten Polyolefinpulver kann die Leistung von Hochleistungseinschneckenmaschinen bis zu 30 % erhöht werden.

An den nachfolgenden Beispielen soll das Verfahren näher erläutert werden:

Beispiel 1

Polyäthylenpulver mit einer mittleren Korngröße von 220 μm, einem Porenvolumen von 4,7 cm³/100 g einer Luftdurchlässigkeit von $2,1 \cdot 10^{-3} \frac{cm^4}{dynsec}$ und einem Schüttgewicht von 440 g/l wurde in einer beheizten Wirbelschicht auf eine Temperatur von 95°C gebracht. Das so erwärmte Pulver wurde anschließend über eine Förderschnecke unter Druck in den Spalt zweier sich gegenläufig drehender, glatter und unbeheizter Walzen mit einem Durchmesser von 650 mm und einer Breite von 200 mm gefördert. Die Anpresskraft der Walzen betrug ca. 0,9 t/cm Walzenlänge. Das verpresste Pulver wurde als Band von den mit 9,5 Upm sich drehender Walzen abgeworfen, in einer Stachelwalze gebrochen und mit einer Hammermühle auf eine mittlere Korngröße von 290 μm zerkleinert.

Das so behandelte Pulver hatte ein Porenvolumen von 0 cm³/100 g, eine Luftdurchlässigkeit von $5,75 \cdot 10^{-3} \frac{cm^4}{dynsec}$ und ein Schüttgewicht von 460 g/l. Extrudierversuche zeigten, daß Extrudat aus so behandeltem Pulver nur 17 Bläschen gegenüber 1500 Bläschen aus unbehandelter Pulverware aufwies.

Beispiel 2

Polyäthylenpulver mit einer mittleren Korngröße von 220 μm, einem Porenvolumen von 4,7 cm³/100 g einer Luftdurchlässigkeit von $2,1 \cdot 10^{-3} \frac{cm^4}{dynsec}$ und einem Schüttgewicht von 440 g/l wurde in einem mit beheizten Röhren bestückten Schacht im Durchlauf auf eine Temperatur von 75° C erwärmt. Das so erwärmte Pulver wurde auf eine Maschine gegeben, die, ähnlich einem Kollergang, aus einer ebenen, kreisförmigen Platte mit einem Durchmesser von 450 mm bestand, auf der vier Walzen *) deren Achsen parallel zur Platte geführt wurden. Die über die Platte laufenden Walzen wurden mit Kräften von 1,6 t/cm Walzenlänge gegen die Platte gepresst. Die Platte wies 250 Bohrungen von 3 mm Durchmesser auf, durch die das Pulver hindurchgepreßt wurden. Der Durchmesser der Walzen betrug 200 mm, ihre Länge 160 mm.

*) abrollten Das so gewonnene zylindrische Granulat wurde in einem Passiersieb auf eine mittlere Korngröße von 350 μm zerkleinert. Das mit diesem Verfahren behandelte Material hatte ein Porenvolumen von 0 cm³/100 g, eine Luftdurchlässigkeit von $3,9 \cdot 10^{-3} \frac{cm^4}{dynsec}$ und ein Schüttgewicht von 450 g/l. Beim Exturdierversuch zeigte das Produkt, hergestellt aus behandeltem Pulver bis 18 Bläschen im Gegensatz zu 1500 Bläschen bei Verwendung von nicht behandeltem Pulver.

Die in den Beispielen angegebenen Werte für Porenvolumen, Luftdurchlässigkeit und Blasenzahl wurden folgendermaßen ermittelt.

Blasenzahl: Zur Bestimmung der Blasenzahl wird aus dem Material mit einem Einschneckenextruder eine Schlauchfolie extrudiert, aus der ein Quadrat von 100 cm² herausgeschnitten wird. Durch Auszählen der in diesem Quadrat enthaltenden Blasen wird die Blasenzahl festgelegt.

Porenvolumen: Das Porenvolumen des Pulvers wird mit Paraffinöl, dessen Siedepunkt zwischen 130° und 170°C liegt, bestimmt. Man gibt 100 g Pulver in ein Gefäß, setzt eine Kapillare auf und flutet das ganze System mit Paraffinöl, anschließend wird gerührt bis keine Blasen mehr austreten. Das entwichene Gas wird gemessen. Der Meßwert für das Porenvolumen kann somit in cm³ Luft pro 100 g Pulver angegeben werden.

Luftdurchlässigkeit: In einem Glaszylinder von 3 cm Innendurchmesser mit Glasfrittenboden werden 100 ml Polyolefinpulver eingefüllt und durch diese Schüttung von oben nach unten 4 Nl/h Luft durchgesaugt. Die zwischen Ober- und Unterkante der Schüttung auftretende Druckdifferenz wird gemessen. Die Luftdurchlässigkeit wird aus den Meßdaten in $\frac{cm^4}{dynsec}$ ermittelt. Bei Pulvern mit Luftdurchlässigkeiten ab $3,5 \cdot 10^{-3} \frac{cm^4}{dynsec}$ ist eine einwandfreie Entlüftung im Einschneckenextruder gegeben.

Patentansprüche:

1. Verfahren zum Verbessern der Verarbeitungseigenschaften von pulverförmigen Polyolefinen, dadurch gekennzeichnet, daß das Polyolefinpulver auf eine Temperatur zwischen 40°C und seinem Schmelzpunkt, vorzugsweise zwischen 80° und 95°C erwärmt und anschließend in den Spalt zweier spaltbildender Elemente gebracht, dort mit Anpresskräften von 0,1 bis 10 t/cm, vorzugsweise 0,8 bis 2 t/cm, Spaltlänge verpresst und das verpresste Pulver zerkleinert wird.

2. Verfahren nach Anspruch 1, dadurch gekennzeichnet, daß das Polyolefinpulver zu einem Band verpresst wird.

3. Verfahren nach Anspruch 1, dadurch gekennzeichnet, daß das Polyolefinpulver zu Granulat verpresst wird.

4. Verfahren nach Anspruch 1 bis 3, dadurch gekennzeichnet, daß das erwärmte Polyolefinpulver mit einer Förderschnekke in den Spalt zweier spaltbildender Elemente gebracht wird.